(19) Europäisches Patentamt
European Patent Office
Office européen des brevets

(11) **EP 3 454 155 A1**

(12) **EUROPÄISCHE PATENTANMELDUNG**

(43) Veröffentlichungstag:
**13.03.2019 Patentblatt 2019/11**

(51) Int Cl.:
***G05B 23/02*** *(2006.01)*

(21) Anmeldenummer: **17190391.7**

(22) Anmeldetag: **11.09.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
 • **Bronner, Johanna**
 **80337 München (DE)**
 • **Eckert, Albert**
 **85055 Ingolstadt (DE)**
 • **Hapfelmeier, Andreas**
 **82054 Sauerlach (DE)**
 • **Mittelstädt, Sebastian**
 **81541 München-Haidhausen (DE)**

(54) **VERFAHREN UND VORRICHTUNG ZUM ERMITTELN ZUMINDEST EINES BETRIEBSZUSTANDES EINER MASCHINE**

(57) Die Erfindung betrifft ein Verfahren zum Ermitteln zumindest eines Betriebszustandes einer Maschine, insbesondere im industriellen Umfeld, bei dem

a) zumindest ein Sensor ins Nahfeld der Maschine gebracht und betrieben wird,

b) zumindest ein Betriebszustand der Maschine derart ermittelt wird, dass zumindest eine Wert einer mit dem Betriebszustand korrelierenden physikalischen Größe durch den Sensor erfasst wird,

c) die Erfassung in zumindest einem ersten Zeitraum, insbesondere in zeitlichen Abständen, erfolgt,

d) zumindest eine Korrelation einer Auswahl an möglichen Betriebszuständen zur Historie der in dem ersten Zeitraum erfassten Werte gebildet wird,

e) das für dem ersten Zeitraum folgenden Erfassungen von Werten eine Festlegung des Betriebszustands aus einer Auswahl an möglichen Betriebszuständen, zumindest auf Grundlage der Korrelation erfolgt,

f) mit zeitlich in dem ersten Zeitraum folgenden Zeiträumen erfassten Werte die Historie und die Korrelation sukzessive aktualisiert werden.

Ferner betrifft die Erfindung eine Vorrichtung mit Mitteln zur Durchführung des Verfahrens.

FIG 1

EP 3 454 155 A1

**Beschreibung**

Die Erfindung betrifft ein Verfahren zum Ermitteln zumindest eines Betriebszustandes einer Maschine gemäß dem Oberbegriff des Anspruch 1 sowie eine Vorrichtung zum Ermitteln zumindest eines Betriebszustandes einer Maschine gemäß dem Oberbegriff des Anspruchs 13.

Es ist bekannt, dass Maschinen, insbesondere im industriellen Umfeld, auf ihren Betriebszustand hin überwacht werden. Hierfür werden Betriebsparameter ermittelt, die Rückschlüsse auf diesen Zustand ermöglichen.

Hierzu ist es bekannt, dass an den Orten wo die Betriebsparameter der Maschine unmittelbar erfasst werden können, Sensoren zu diesem Zweck bei der Herstellung der Maschine angebracht werden. Diese können dann beispielsweise durch die Maschinensteuerung mit gesteuert und ausgewertet werden. Nachteilig hierbei ist. Die Integration von Sensoren aber auch die Steuerung bedingen aber Mehrkosten, die sich mit der Anzahl der Maschinen akkumulieren.

Daher ist es auch bekannt statt die Sensoren fest integriert anzubringen, die Maschinen derart zu bilden, dass externe Sensoren zur Erfassung an den Ort des Betriebsparameters gebracht werden kann. Bei konsequenter Fortführung dieses Ansatzes kann auch die Steuerung der Erfassung desintegriert werden und stattdessen mit den externen Sensoren kombiniert werden. Nachteilig hierbei ist, dass die Maschinen dafür ebenfalls entsprechend gestaltet werden müssen, so dass dies ebenfalls noch zusätzliche Kosten verursacht und die externen Sensoren zudem nicht bei beliebigen Maschinen eingesetzt werden können, da dies ja nicht standardisiert ist. Dies ist in einem typischer Weise heterogenen Umfeld, wie es sich im industriellen Einsatz von Maschinen vorfindet nachteilig.

Die der Erfindung zugrundeliegende Aufgabe besteht darin eine Lösung anzugeben, die zumindest die genannten Nachteile des Standes der Technik zu überwinden.

Diese Aufgabe wird durch das Verfahren zum Ermitteln zumindest eines Betriebszustandes einer Maschine, gemäß dem Oberbegriff des Anspruchs 1, durch dessen kennzeichnenden Merkmale, sowie durch die Vorrichtung zum Ermitteln zumindest eines Betriebszustandes einer Maschine, gemäß dem Oberbegriff des Anspruchs 13, durch dessen kennzeichnenden Merkmale gelöst.

Weitere vorteilhafte Ausgestaltungen und Weiterbildungen der Erfindung sind durch die Unteransprüche angegeben.

Bei dem erfindungsgemäßen Verfahren zum Ermitteln zumindest eines Betriebszustandes einer Maschine, insbesondere im industriellen Umfeld

a) wird zumindest ein Sensor ins Nahfeld der Maschine gebracht und betrieben,
b) wird zumindest ein Betriebszustand der Maschine derart ermittelt, dass zumindest ein Wert einer mit dem Betriebszustand korrelierenden physikalischen Größe durch den Sensor erfasst wird,
c) erfolgt die Erfassung in zumindest einem ersten Zeitraum, insbesondere in zeitlichen Abständen,
d) wird zumindest eine Korrelation einer Auswahl an möglichen Betriebszuständen zur Historie der in dem ersten Zeitraum erfassten Werte gebildet,
e) erfolgt für dem ersten Zeitraum folgenden Erfassungen von Werten eine Festlegung des Betriebszustands aus einer Auswahl an möglichen Betriebszuständen, zumindest auf Grundlage der Korrelation,
f) werden mit zeitlich in dem ersten Zeitraum folgenden Zeiträumen erfassten Werte die Historie und die Korrelation sukzessive aktualisiert.

Durch diese Verfahrensweise wird es möglich den Betriebszustand einer Maschine zu erfassen, ohne dass diese hierfür speziell vorbereitet sein muss, da der Sensor lediglich an, auf, oder neben die Maschine, also ins Nahfeld der Maschine, gebracht werden muss, da dort bereits korrelierende Größen messbar sind. Hierdurch kann die erfindungsgemäße Vorrichtung zum Erfassen zumindest eines Betriebszustandes flexibel an beliebigen Maschinen eingesetzt werden, wobei diese Flexibilität durch die Korrelation und Aktualisierung gemäß dem Verfahren weiter unterstützt wird, da sich hiermit die Vorrichtung selbstständig auf neue Einsatzbedingungen einstellen kann.

Vorzugsweise wird das erfindungsgemäße Verfahren dabei derart weitergebildet, dass die Korrelation auf Grundlage zumindest eines Schwellwertvergleichs erfolgt. Mit Hilfe eines Schwellwertvergleichs lässt sich eine Diskriminierung von Betriebszuständen einfach implementieren, wobei dies, insbesondere durch die Wahl geeigneter physikalischer Größen unterstützt, auch zu akkuraten Ergebnissen führt.

Gemäß einer Weiterbildung des erfindungsgemäßen Verfahrens wird ein dem Schwellwertvergleich zugrundeliegender Schwellwert zumindest auf Grundlage der Historie, insbesondere der Verteilung der der Historie zugrundeliegenden Werte der erfassten physikalischen Größen, gebildet. Dies unterstützt das selbstständige Anpassen des Verfahrens und der erfassenden Vorrichtung bei einer Selbstanpassung an neue Gegebenheiten, wie neue Maschine, anderer Betrieb, da die Kenntnis mehrerer vergangener Werte sehr gut für statistische Auswertungen und Algorithmen geeignet sind. Ferner werden die Festlegungen damit auch zuverlässiger, so dass diese Weiterbildung insbesondere im Rahmen einer Kalibrierung von Vorteil ist, speziell bei einer (erneuten) Initialisierung des erfindungsgemäßen Verfahrens bzw. der Vorrichtung.

Vorzugsweise ist es daher von Vorteil, wenn das erfindungsgemäße Verfahren derart weitergebildet wird, dass der Schwellwert fortlaufend durch zeitlich dem ersten Zeitraum folgende erfasste Werte aktualisiert wird, so kann zum Einen der Schwellwert angepasst werden, wenn sich beispielsweise der Wertebereich der physikalische Größe beispielsweise abhängig von der Dauer des Betriebs ändert, so dass die Diskriminierung von Betriebszuständen anhand der alten Zuordnung zu Fehlinterpretationen führen würde.

Alternativ oder ergänzend kann das Verfahren gemäß Erfindung, derart weitergebildet werden, dass die Aktualisierung des Schwellwerts, Korrelation und/oder der Festlegung auf zumindest Grundlage der Qualität des Unterschieds, insbesondere der Richtung der Veränderung des Wertes im Bezug zum Schwellwert, von aktuellem Wert und Schwellwert initiiert wird.

Hierdurch wird ein weiterer Freiheitsgrad für das Verfahren realisiert, der es ermöglicht flexibel auf die Gegebenheiten am Ort der Erfassung zu reagieren und so genauere Entscheidungen zu liefern bzw. einzelne Unterprozesse des Verfahrens nur bei Bedarf zu aktivieren, so dass das Verfahren ressourcenschonender und effizienter funktioniert.

Vorzugsweise wird das erfindungsgemäße Verfahren dabei derart weitergebildet, dass die Initiierung bei Auftreten eines signifikanten Qualitätsunterschieds, beispielsweise Richtungswechsel und/oder Wert der Zu- bzw. Abnahme des Wertes, erfolgt. Mit den genannten Qualitätsunterschieden liegen sehr gute Indikatoren von Änderungen des Betriebszustandes vor, so dass die Initiierung bei Auftreten einer der genannten Ereignisse mit sehr hoher Wahrscheinlichkeit auch angemessen ist.

Alternativ oder ergänzend kann das Verfahren gemäß Erfindung auch derart weitergebildet werden, dass die Bildung des Schwellwerts auf Grundlage einer Mittelwertbildung der Verteilung der bekannten Werte der physikalischen Größe erfolgt. Hierdurch ist eine sehr statistische Methode gegeben, die eine hohe Treffsicherheit bei der Festlegung der Betriebszustände erlauben.

Dieser Vorteil wird verstärkt, wenn das erfindungsgemäße Verfahren, derart weitergebildet wird, dass die Mittelwertbildung Messereignis-getrieben, insbesondere auf Grundlage mindestens zweier erfasster Werte, pro Betriebszustand basierenden, Algorithmen, insbesondere nach Art des so genannten "k-means Cluster", gemäß einer adaptiven Anpassung durch ein 2 Stufen Modell ("Adaptives 2 Stufen Modell" oder "Adaptive Plateau Fitter"), und/oder gemäß einem Vergleich fließender Mittelwerte mit unterschiedlichen Fenstergrößen ("Fließender Mittelwertsvergeleich" oder "Sliding Aggregation Window"), durchgeführt wird.

Erfolgt die Festlegung des Betriebszustandes erst ab einer bestimmten Anzahl an Messerwerten gemäß weiteren vorteilhaften Weiterbildung des erfindungsgemäßen Verfahrens, insbesondere als Bestandteil eines Kalibrierungsprozesses, vorzugsweise im Rahmen einer Initialisierung des Verfahrens zur Erfassung, wird sichergestellt, dass ausreichend Daten vorhanden sind, damit die statistischen Methoden akkurat funktionieren können.

Vorteilhaft ist es auch, wenn das Verfahren gemäß Erfindung derart weitergebildet wird, dass als Betriebszustand bis zum Erreichen der Anzahl von Messwerten und/oder bei Vorliegen einer zumindest teilweise noch nicht erreichter Diskriminierbarkeit der Betriebszustände ein die Unbestimmbarkeit kennzeichnender Zustand festgelegt wird. Dadurch wird für Nutzer des Verfahrens die Situation deutlich und es liegen ausnahmslos klar definierte Zustände vor, auf deren Grundlage dann beispielswiese eindeutige Entscheidungen getroffen werden können.

Vorzugsweise wird das erfindungsgemäße Verfahren derart weitergebildet, dass für den Schwellwertvergleich als Werte physikalische Größen herangezogen werden, die als Eigenschaft eine gute Diskriminierung von Zuständen einer Maschine ermöglichen. Dies wirkt sich ebenfalls auf Zuverlässigkeit der Entscheidungen positiv aus.

Besonders geeignete physikalische Größen werden durch die Weiterbildung des erfindungsgemäßen Verfahrens erreicht bei der als physikalische Größen im Bezug auf die Maschine extern erfassbare physikalische Größen, wie Temperaturen, insbesondere Außentemperatur der Maschine, Magnetfeldstärken und/oder -verlauf, insbesondere im Umfeld der Maschine, Vibrationen der Maschine und so fort, erfasst werden.

Die Erfindungsgemäße Vorrichtung zum Ermitteln zumindest eines Betriebszustandes einer Maschine, zeichnet sich durch Mittel zur Durchführung des Verfahrens und/oder der Weiterbildungen des Verfahrens aus und trägt somit zur Verwirklichung der dort genannten Vorteile bei.

Weitere Vorteile und Details der Erfindung werden anhand der Figuren 1 bis 4 erläutert. Dabei zeigt

Figur 1    ein Ablaufdiagramm eines Ausführungsbeispiels des erfindungsgemäßen Verfahrens,

Figur 2    schematisch den Ablauf eines zu einem alternativen Ausführungsbeispiel des erfindungsgemäßen Verfahrens führenden alternativen Ansatz für die Schwellwertaktualisierung,

Figur 3    schematisch den Ablauf eines zu einem alternativen Ausführungsbeispiel des erfindungsgemäßen Verfahrens führenden weiteren alternativen Ansatz für die Schwellwertaktualisierung,

Figur 4    die sich gemäß dem ersten zweiten und dritten Ausführungsbeispiel des erfindungsgemäßen Verfahrens gebildeten Gruppen von Messungen mit ähnlichen Eigenschaften, im Folgenden je nach Ausführungsbeispiel auch Cluster und Plateau genannt.

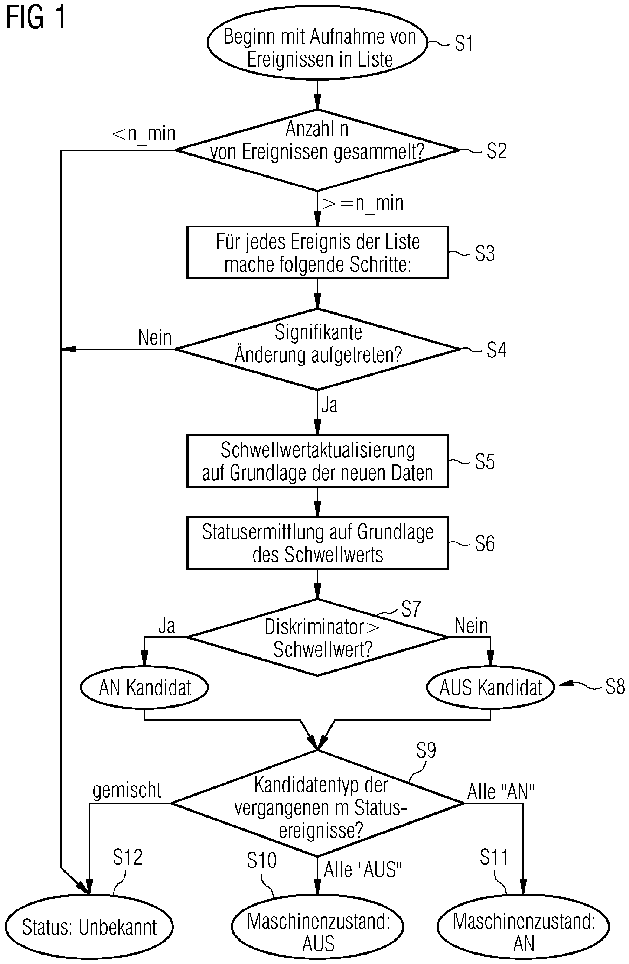

In der Figur 1 ist schematisch ein Ablaufdiagramm eines Ausführungsbeispiels des erfindungsgemäßen Verfahrens dargestellt. Für diese und die folgenden Figuren gilt, dass gleich bezeichnete Elemente und Parameter figurenübergreifend gleich definiert sind.

Bei dem dargestellten Ausführungsbeispiel startet die erfindungsgemäße Statusbestimmung mit einem als ersten Schritt S1 bezeichneten Zustand in dem Messungen an der Maschine an der aktuell die das erfindungsgemäße Verfahren ausführende Sensorbox positioniert ist durchgeführt werden und somit sukzessive einzelne Messereignisse erfasst und, insbesondere strukturiert in einer Liste, gespeichert werden.

In einem zweiten Schritt S2 wird überprüft, ob die gesammelte Anzahl n von Ereignissen einen ersten Schwellwert n min erreicht bzw. überschritten hat oder sich noch unterhalb des Schwellwertes befindet. Ist dies der Fall verbleibt die Bewertung in dem als elfter Schritt S11 bezeichneten den bewerteten Status wiedergebenden Zustand "Unbekannt".

Hat die Anzahl dagegen die Mindestanzahl, also der erste Schwellwert n_min, erreicht, werden für alle Ereignisse der Liste in einem dritten Schritt S3 die folgenden Schritte durchgeführt:

Beginnend mit einem vierten Schritt S4 erfolgt eine Auswertung, ob eine signifikante Änderung aufgetreten ist. Ist dies nicht der Fall, verbleibt die Bewertung des Status mit "Unbekannt", was durch den als elften Schritt S11 bezeichneten Zustand gekennzeichnet ist.

Ist jedoch eine Änderung aufgetreten, kann in einem fünften Schritt S5 eine Schwellwertaktualisierung durchgeführt werden, bei dem ein zweiter Schwellwert, der für einen Vergleich mit einer Betriebszustände von Maschinen gut diskriminierenden Variable, im Folgenden mit Diskriminator bezeichnet, herangezogen wird. Diese Aktualisierung erfolgt dabei bei jedem Durchlauf auf Grundlage der neuen Daten mittels eines geeigneten Algorithmus.

Für das erfindungsgemäße Verfahren können hierfür beispielsweise ein so genannter "Adaptive Plateau Fitter" Algorithmus, ein so genannter "Sliding Average" Algorithmus oder ein so genannter "k-means Cluster" Algorithmus eingesetzt werden.

In einem sechsten Schritt S6 kann dann eine Statusermittlung auf Grundlage des zweiten Schwellwerts erfolgen. Hierzu wird in einem achten Schritt S8 verglichen, ob der Diskriminator größer oder kleiner als der zweite Schwellwert ist.

Je nachdem wie das Ergebnis lautet, wird in einem achten Schritt S8 der Typ des Kandidaten festgelegt. Bei dem dargestellten Beispiel wird der Kandidaten Typ als "AUS" Kandidat festgelegt, wenn der Diskriminatorwert nicht größer als der Schwellwert ist und als "AN", wenn der Diskriminatorwert größer als der Schwellwert ist(Abhängig von der gewählten Messgröße kann dies auch andersherum sein)

Sollte unbekannt sein, ob die Messgröße im Mittel im "AN" oder im "AUS" Zustand größer ist kann alternativ über die Vorgabe, dass die Sensorik, bei ausgeschalteter Maschine in Betrieb genommen wird, die Ordnung von "An" und "AUS" zur Messgröße an Hand der ersten signifikanten Änderung bestimmt werden. Gilt bei der ersten signifikanten Änderung für die Messgröße:

Zeitliche Aufwärtsbewegung → Diskriminator(AUS) > Diskriminator(AN)

Zeitliche Abwärtsbewegung → Diskriminator(AN) > Diskriminator(AUS)

In einem neunten Schritt S9 wird die Verteilung der Kandidatentypen der vergangenen m Statusereignisse ermittelt, um eine endgültige Bestimmung des Betriebszustandes festzulegen. Dabei wird gemäß dem Ausführungsbeispiel in einem zehnten Schritt S10 bei ausschließlichem Auftreten vom Kandidatentyp "AUS", der Maschinenzustand als "AUS" festgelegt, während in einem elften Schritt S11 für den Fall, dass alle Kandidaten als Typ "An" bewertet worden sind, auf den Maschinenzustand "AN" festgelegt, so dass bei hiervon abweichender Verteilung, also einer Mischung von Kandidaten, die "An" oder "Aus" bewertet worden sind, in einem zwölften Schritt S12 mit einem Status "Unbekannt" festgelegt werden. Der so festgelegte Status ist dann der als ermittelter Zustand erfasste Zustand der beobachteten Maschine.

Je nach verfügbarem Speicherplatz der Sensorik, kann die sich in S1 füllende Liste auf eine Maximalanzahl an Werten analog eines FIFO Ringspeichers auf eine bestimmte Speicherplatzgröße beschränkt werden in dem alte Werte verworfen werden, bzw. nur Aggregationen gespeichert werden. Die im Folgenden beschriebenen Ausführungsbeispiele vom fünften Schritt S5 sind dafür ausgelegt immer wieder Werte mit gleichem Betriebszustand zu aggregieren und aus der Liste zu löschen.

Das erfindungsgemäße Verfahren, insbesondere das beschriebene Ausführungsbeispiel, ermöglicht damit also eine automatische Bestimmung der Kennzahlen einer Maschine, wie gezeigt beispielswiese den Betriebszustand = An/Aus aber auch andere Betriebsparameter, wie Drehzahl oder Last etc.

Durch die Erfindung wird es zudem möglich den Zustand verschiedenerer Maschinen zu ermitteln, wobei die Erfindung es ermöglicht, dass dieser mittels einer nicht spezifischen, mit rudimentärer Sensorik ausgestatteten externen Box bestimmt werden kann, bei der beispielsweise die Sensoren kosten-, platz- und energiesparend in einer kleinen

4

Box auf der Maschine platziert werden können. Durch das erfindungsgemäße Verfahren wird es dabei auch möglich sowohl mit wenig Speicherplatz auf der Platine in der Box, als auch mit Einschränkungen in der CPU Leistung auszukommen. Somit kommt das vorgeschlagene Verfahren im speziellen auch für eine rein batteriebetriebene Sensorik in Frage (Bespiel: Smart Box).

Sie ermöglicht zudem die Bestimmung eines Maschinenzustands, auch eine erfindungsgemäße Zustandsbestimmungsanordnung bei der die Sensoren nicht an der, für die Kennzahlbestimmung, optimalen Position, die beispielsweise direkt am Ort des Geschehens in der Maschine wäre, angebracht sind, so dass erfindungsgemäß Kennzahlen, die nicht direkt ausgeleitet werden können, erfindungsgemäß statt mit einer direkten Messung der Kennzahlen, indirekt durch Sensoren gemessen, in diese nur rudimentär erfassbare Größen, wie beispielsweise das Magnetfeld, die Beschleunigung/Vibration und/oder die Temperatur an der Position der Box ermitteln.

Das erfindungsgemäße Verfahren, insbesondere das gezeigte Ausführungsbeispiel, berücksichtigt dabei auch, dass Messungen Störgrößen des Umfelds unterliegen.

Dies wird insbesondere durch die erfindungsgemäß eingesetzten Schwellwerte und Zuordnung eines Status nur dann, wenn er als stabil angenommen werden kann.

Dies wird auch insbesondere durch die Bestimmung der Kennzahlen mittels eines erfindungsgemäße eingesetzten Algorithmus erreicht, der derart funktioniert, dass aus den indirekten Messungen Variablen bestimmt werden, an Hand derer auf die Kennzahlen geschlossen werden kann.

Dabei ermöglicht die Erfindung, dass ein Einsatz einer oben genannten Box trotz einer Verschiedenartigkeit der zu beobachtenden Maschinen ohne manuelle Inspektion erfolgen kann, da das erfindungsgemäße Verfahren einen Prozess einer selbstkalibrierenden Maschinenüberwachung sowie eine entsprechende Anordnung (Box) bereitstellt.

Weitere Details des Ausführungsbeispiels des erfindungsgemäßen Verfahrens, insbesondere des gemäße Ausführungsbeispiel verwendeten k-means Cluster Algorithmus, sowie der Erfindung sollen im Folgenden anhand einer detaillierteren Erläuterung des dargestellten Beispiels, insbesondere der Wirkung bzw. der Vorteile einzelner Schritte dargelegt werden.

Ein zentrales Element des erfindungsgemäßen Ausführungsbeispiels ist die erfindungsgemäße Nutzung eines datengetriebenen, adaptiven Algorithmus, der direkt auf der externen Box ausgeführt wird, die lediglich ins Nahfeld, insbesondere auf/an die Maschine angebracht bzw. gelegt wird. Hierdurch werden die genannten Vorteile erreicht bzw. die Grundlage dafür geschaffen. Einzige Vorraussetzungen dafür sind:

- Eine Initiale Kalibrierungsphase (bzw. mindestens ein Wechsel des Betriebszustands)

- Eine, aus den Sensordaten, beispielsweise Magnetfeld- und Vibrationsdaten, berechenbare Variable, die die verschiedenen Betriebszustände gut diskriminiert, welche im Ausführungsbeispiel als "Diskriminator" bezeichnet ist.

Hierauf basierend beginnt in den ersten beiden Schritten S1 der Prozess gemäß Ausführungsbeispiel der Erfindung damit aus den hereinlaufenden Messungen die Diskriminatorwerte zu berechnen und zu speichern, bis ein Minimum (n_min) an Messungen vorhanden ist (S2).

Sofern dies nicht der Fall ist, wird zunächst wie im zwölften Schritt S12 ein unbekannter Betriebszustand ausgegeben. Sind n_min Werte vorhanden (S2) wird bestimmt ob der neue Wert signifikant, also beispielsweise mehrere Standardabweichungen, anders ist als der Mittelwert der vergangenen Werte oder wie in den noch folgenden Ausführungsbeispielen 1 bis 3 der Weiterbildung der Schwellwertaktualisierung des fünften Schrittes S5 beschrieben. (S3)

Wurde eine signifikante Änderung beobachtet (S4), kann gemäß der erfinderischen Überlegungen davon ausgegangen werden, dass verschiedene Betriebszustände durchlaufen wurden.

Erfindungsgemäß bestimmt bzw. aktualisiert ein datengetriebener Algorithmus den Schwellenwert (S5), an Hand dessen der Betriebszustand zugeordnet werden kann (S5). Bei dem gezeigten Ausführungsbeispiel wird hierzu ein 1-dimensionaler k-means Cluster Algorithmus mit 2 Clustern (https://en.wikipedia.org/wiki/K-means clustering) verwendet.

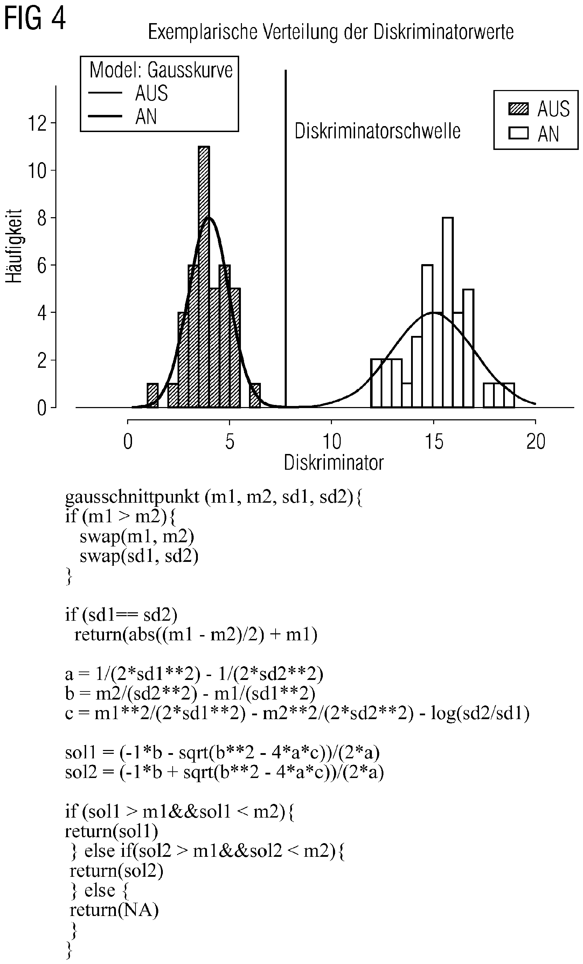

Der k-means Clusteralgorithmus teilt dabei für das Ausführungsbeispiel die gespeicherten Diskriminatorwerte in 2 Cluster auf. Diese seien im Folgenden als c1 und c2 definiert (siehe Figur 4 mitsamt zugehöriger Beschreibung für ein Beispiel wie sich die gemessenen Diskriminatorwerte verteilen und dabei für AN und AUS zwei gut separierbare Cluster bilden).

Der Cluster mit dem höheren Schwerpunkt wird dem An- bzw. Aus-Zustand zugeordnet, je nachdem ob der Diskriminator positiv oder negativ zu den Kategorien AUS und AN korreliert ist.

Der Schwellenwert, welcher hierin im Folgenden als disk_schwelle definiert ist wird im Bereich zwischen den beiden Clustern gewählt. Um zu berücksichtigen, dass die Messungen abhängig vom Betriebszustand unterschiedlich stark streuen können wird jeder Cluster mit einer auf 1 normierten Gausskurve

$$g(x,m,s) := 1/(2*pi)*exp(-(x-m)**2/2*s**2)$$

modeliert, so dass

$$g1 = g(x,mean(c1),sd(c1))$$

$$g2 = g(x,mean(c2),sd(c2))$$

mit

mean()    := Mittelwert (Funktion)
sd()    := Standardabweichung (Funktion)
exp()    := Exponantialfunktion (Funktion)

Die Diskriminatorschwelle ergibt sich dann aus dem Schnittpunkt der beiden Gausskurven g1(disk_schwelle) = g2(disk_schwelle) (siehe Figur 4 und Pseudocode darunter).

Ein alternativer oder ergänzender Ansatz kann darin bestehen, die Clustermittelwerte und -standardabweichungen zu verwenden, um anstatt eines harten Schwellenwerts der nur "AN" und "AUS" unterscheidet auch einen unsicheren Zustand zu definieren, der nicht klar An oder Aus zugeordnet werden kann (S6).

Der potentielle Betriebszustand kann nun mittels disc_schwelle bestimmt werden (S7, S8).

Erst wenn über einen längeren Zeitraum (m Status Messungen) der gleiche potentielle Betriebszustand eingenommen wird (S9), wird der Betriebszustand definitiv bestimmt (Stabilitätsbedingung) (S10...S12).

Damit die zu haltende Datenmenge im Speicher nicht zu groß wird, kann das erfindungsgemäße Verfahren, insbesondere das beschriebene Ausführungsbeispiel, derart ergänzt werden, dass in regelmäßigen Abständen, anstatt der vergangenen Diskriminatorwerte nur noch die Clusterschwerpunkte und Breiten gespeichert werden, beispielsweise analog dem BIRCH Algorithmus.

Es ist ersichtlich, dass ein erfindungsgemäßer Vorteil darin besteht, dass der Schwellenwert immer wieder neu berechnet wird und sich selbstständig korrigiert, falls sich Maschinen oder Umgebungsbedingungen ändern. Hierdurch werden auch potentielle anfängliche Fehlmessungen, aufgrund einer zu kleinen Datenbasis so korrigiert.

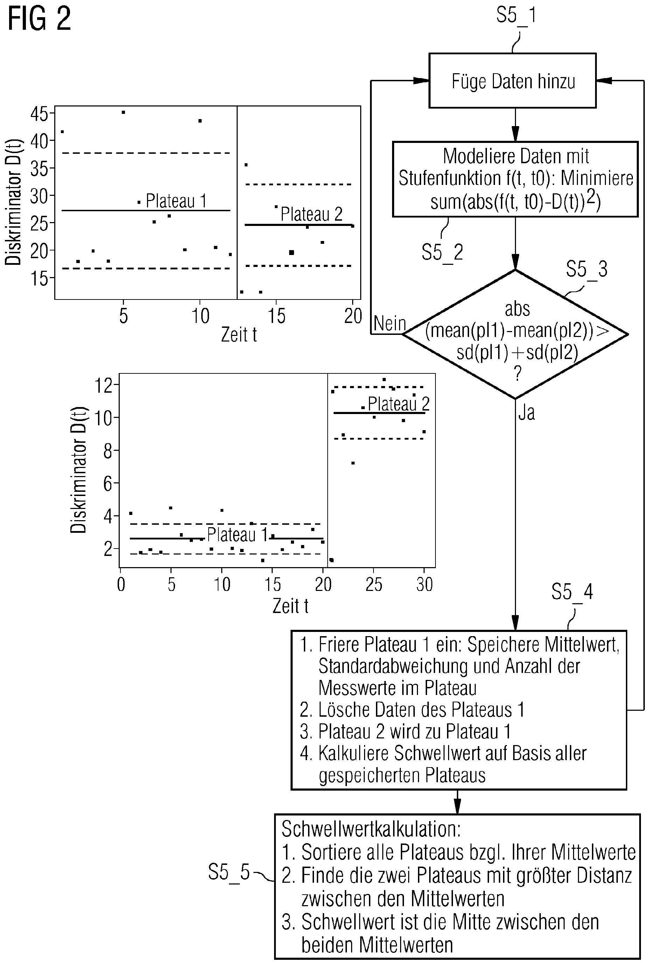

In Figur 2 ist schematisch der Ablauf eines zu einem alternativen Ausführungsbeispiel des erfindungsgemäßen Verfahrens führenden alternativen Ansatz für die Schwellwertaktualisierung gezeigt, welcher beispielsweise das in Figur 1 erläuterte Beispiel dadurch variiert und zu einem weiteren Ausführungsbeispiel der Erfindung führt, dass er im Rahmen des fünften Schrittes S5 eingesetzt wird. Es handelt sich dabei um einen als "Adaptive Plateau Fitter" bezeichneten Ansatz, der ein adaptive Anpassung durch ein 2 Stufen Modell bezeichnet (auch kurz als "Adaptives 2 Stufen Modell" bezeichnet).

Zu erkennen ist, dass gemäß der Verfahrensweise die in den vorhergehenden Schritten erhaltenen Daten in einem ersten Unterschritt S5_1 der Verarbeitung gemäß "Adaptive Plateau Fitter" zugefügt werden.

In einem zweiten Schritt S5_2 erfolgt dann eine Modellierung der Daten in einer, beispielsweise als Subroutine ausgestalteten, Stufenfunktion f(t,t0) über die Zeit t:

$$f(t <= t0) := mean(D(t<=t0))$$

$$f(t > t0) := mean(D(t>t0))$$

wobei mit D(t) die Messwerte des Diskriminators D(t) gemeint sind und t0 den Zeitpunkt darstellt, bei dem die Maschine am wahrscheinlichsten ihren Betriebszustand geändert hat. Anhand einer Minimierung der Summe der Quadratischen Abstände zwischen Messwerten und Modell:

$$argmin\_t0(sum(abs((f(t,t0) - D(t))**2)))$$

mit

argmin_x   := x für den der minimal Wert angenommen wird
sum         := Summe (Funktion)
abs          := Absoluter Betrag (Funktion)

kann das ideale t0 gefunden werden an Hand dessen die Daten, ähnlich wie im Falle des k-mean Cluster Algorithmus in zwei Plateaus:

$$pl1 = D(t <= t0)$$

$$pl2 = D(t > t0)$$

zerlegt werden können.

In einem dritten Schritt S5_3 wird nun die Bedingung

$$abs(mean(c1) - mean(c2)) > sd(c1) + sd(c2)$$

geprüft.

Ist diese Bedingung noch nicht erreicht, wird zum ersten Schritt S5_1 zurückgekehrt und weitere Daten hinzugefügt. Wenn diese Bedingung erfüllt ist, dann wird das Verfahren in einem vierten Schritt S5_4 fortgesetzt, in dem

1. Ein Einfrieren des Plateaus 1 mittels Speicherung des Mittelwerts, der Standardabweichung und der Anzahl an Messungen erfolgt.
2. Anschließend die Daten des dem zugrundeliegenden Plateaus 1 gelöscht werden.
3. Dem Folgend Plateau 2 als Plateau 1 gesetzt.
4. Schließlich der Schwellwert auf Basis aller gemäß Punkt 1 gespeicherten Plateaus berechnet.

Die Schwellwertberechnung erfolgt dabei in einem fünften Schritt S5_5 in dem

1. Alle Plateaus bzgl. Ihrer Mittelwerte M sortiert werden: (M1, ..., Mn)
2. 2 Plateaus mit größter Distanz zwischen den Mittelwerten ermittelt werden:

max(abs(M1-M2),...,abs(M1-Mn),abs(M2-M3),...,abs(M2-Mn),...,abs(Mn-1,Mn))

3. Der Schwellwert sich aus dem Schnittpunkt zweier Gaußkurven mit Mittelwerten und Standardabweichungen der zuvor ermittelten beiden Plataus ergibt (siehe Figur 4 und die Beschreibungen im Teil zum k-Means).

Die gespeicherten Standardabweichungen und Anzahlen an Messungen der jewiligen Plateaus können dazu dienen komplexere Kriterien zu definieren um die beiden Plateaus mit größtem Abstand zu identifiezieren. So können z.B. Plateaus mit zu wenigen Messungen verworfen werden und Distanzen so berechnet werden, dass die Standardabweichungen reziprok eingehen.

Zur besseren Verständlichkeit sei der "Adaptive Plateau Fitter" Einsatz gemäß Ausführungsbeispiel der Erfindung in anderen Worten und mit weiteren Details, insbesondere Parameter und Funktionen, der Schrittefunktion, wiedergegeben. Die Parameter und Funktionen sind wie folgt definiert:

| | |
|---|---|
| a1...an | := Plateau 1 bis n |
| x_step | := Stufe |
| n | := Anzahl der Messungen/Datenwerte |
| F() | := Stufenfunktion |
| x | := Datenwert |
| x1...xn | := Datenwert 1 bis n |

Die vorhandenen Daten (S5_1) werden zunächst an Hand einer Stufenfunktion F(x) mit 2 Plateaus (a1 und a2) und a2) modelliert (S5_2):

$$F(x, x\_step) = a1 \quad (x < x\_step)$$

$$F(x) = a2 \quad (x >= x\_step)$$

x_step wird dabei durch Minimierung des Abstands aller Datenpunkte zu den Funktionen F(x,[x1,...,xn]) ermittelt.

Es folgt eine Überprüfung dahingehend ob, die beiden Plateaus a1 und a2 signifikant voneinander entfernt liegen (S5_3).

Ist das der Fall wird (S5_4) der Mittelwert means, die Standardabweichung sd und die Anzahl an Messungen n des ersten Plateaus a1 abgespeichert und die Daten des ersten Plateaus a2 selbst werden verworfen. Nur die Daten des zweiten Plateaus werden im Speicher gehalten.

Liegen a1 und a2 innerhalb ihrer Standardabweichungen werden alle Werte im Speicher gehalten und mehr Daten gesammelt (Zurück zu S5_1) solange bis sich die beiden Plateaus signifikant unterscheiden (S5_3).

Zu jedem Zeitpunkt (nach vorhergegangener Kalibrierungsphase S5_1 bis S5_3) wird das maximale Delta zweier benachbarter Plateaus gegeben durch die Funktion

$$\max(abs(a2-a1), abs(a3-a3), \ldots, abs(an-an-1))$$

berechnet. Der gesuchte Schwellenwert liegt dann wie bereits erläutert, genau zwischen diesen beiden Nachbarn.

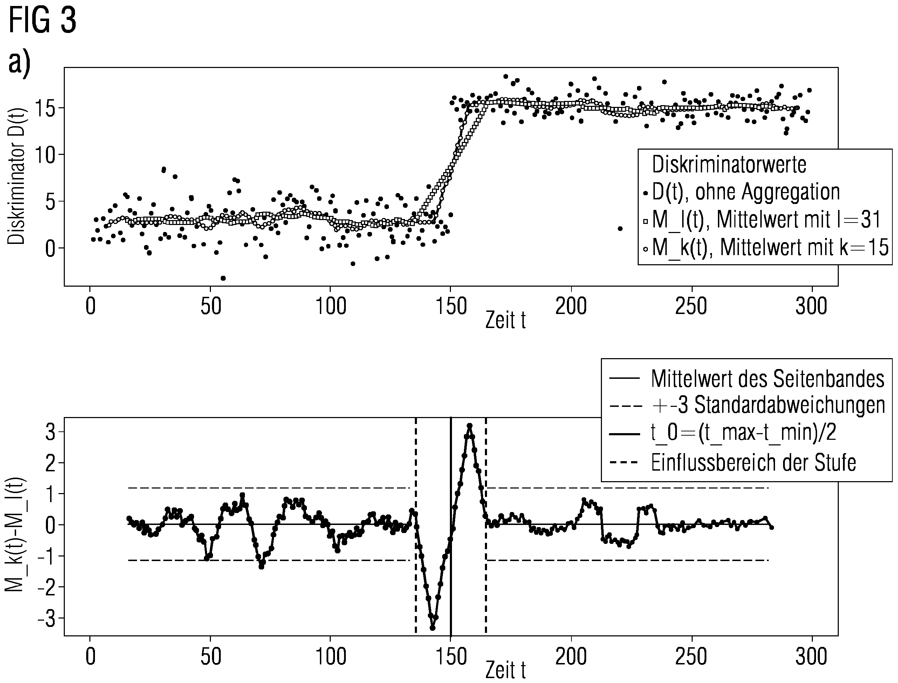

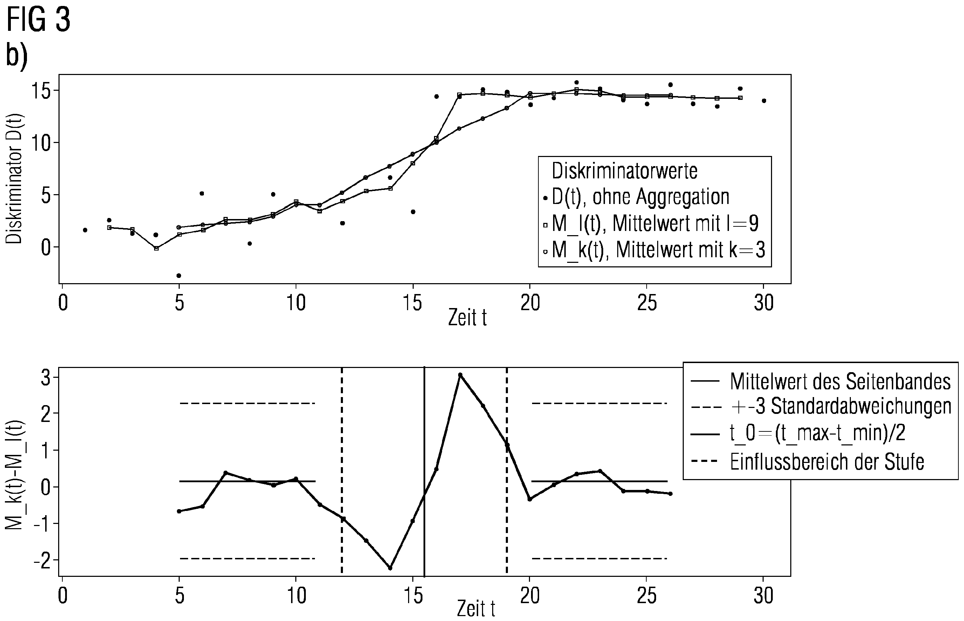

In Figur 3 ist schematisch ein weiterer zu einem alternativen Ausführungsbeispiel des erfindungsgemäßen Verfahrens führender zweiter alternativer Ansatz für die Schwellwertaktualisierung gezeigt, welcher beispielsweise das in Figur 1 erläuterte Beispiel dadurch variiert und zu einem weiteren Ausführungsbeispiel der Erfindung führt, dass er beispielsweise im Rahmen des sechsten Schrittes S6 eingesetzt wird. Es handelt sich dabei um den einen "Sliding Aggregation Window" Ansatz, der einen Ansatz bezeichnet bei dem ein Vergleich fließender Mittelwerte mit unterschiedlichen Fenstergrößen erfolgt (kurz auch mit "Fließender Mittelwertvergleich" bezeichnet). Dargestellt sind in der oberen Zeitreihe der Figur 3 a und b Datenwerte und deren gemäß dem Ansatz gebildete Mittelwerten.

Bei diesem Ausführungsbeispiel sind zumindest die folgenden Schritte umfasst:

- Es wird für jeden gemessenen Diskriminatorwert D(t) der Mittelwert oder Median aller Werte in einem Fenster der Länge k und l um diesen Werte berechnet. D.h. es wird ein Mittelwert über k Werte gebildet und ein Mittelwert über l Werte. (Anm. Um ein Fenster zu erhalten, bei dem der aktuelle Vergleichswert genau in der Mitte des Fensters liegt ist die Wahl von ungeraden k und l sinnvoll). Es sei k < l. Dann reagiert der zu k gehörende Mittelwert M_k(t) sensitiver auf Änderungen in den Daten als der zu l gehörende M_l(t).

- Die Mittelwerte werden mit jedem neuen Datenpunkt aktualisiert.

- Gleichzeitig wird die Differenz Diff_kl = M_k(t) - M_l(t) gebildet und der Zeitpunkt maximaler und minimaler Differenz t_max und t_min bestimmt.

- Nun wird der Einflussbereich der Stufe in den Daten bestimmt. Dieser beginnt wenn im größeren Fenster l der erste Wert nach der Stufe hinzugefügt wird und endet, wenn der letzte Wert vor der Stufe aus dem Fenster l entfernt wird. Der Bereich ist desshalb genau l-l Werte Lang und erstreckt sich um den Zeitpunkt t_0 = (t_max - t_min)/2

- Aus allen Werten außerhalb des Einflussbereichs der Stufe,in der Folge Seitenband genannt, wird der Mittelwert M_diff und die Standardabweichung SD_diff der Differenz Diff_kl gebildet.

- Um zu identifizieren, ob eine signifikante Änderung in den Daten gefunden worden ist, werden folgende Forderungen an die Verteilung von Diff_kl gestellt:

  1. t_min < t_max (wenn k < l und Aufwärtsstufe, sonst umgekehrt)
  2. Der Bereich zwischen t_min und t_max sollte minimal k - Delta Werte und maximal k + Delta Werte enthalten, wobei an Hand des Deltas Schwankungen in den Daten aufgefangen werden können. In den meisten Fällen kann Delta = 0.2*k als Faustregel dienen
  3. abs(Diff_kl(t_max)) > M_diff + 3*SD_diff
  4. abs(Diff_kl(t_min)) > M_diff + 3*SD_diff

- Sind die oberen Forderungen nicht erfüllt werden neue Daten hinzugefügt.

- Sind die oberen Forderungen erfüllt, ist eine signifikante Änderung erkannt und eine Schwellenwertberechnung an Hand der Gaussschnittpunkts-Bestimmung kann durchgeführt werden indem die Daten am Zeitpunkt t_0 in 2 Gruppen zerlegt werden.

- Ähnlich dem "Adaptive Plateau Fitter", kann auch die "Sliding Window Aggregation" Methode adaptiv gestaltet werden, indem immer dann Datengruppen eingefroren werden, wenn ein t_0 mit signifikanter Datenänderung über obige Methode gefunden worden ist. Die Speicherung des Mittelwertes und der Standardabweichungen der eingefrorenen Datengruppe wird vorgenommen.

- Zu jedem Zeitpunkt (nach vorhergegangener Kalibrationsphase) wird das maximale Delta zweier benachbarter stabiler Mittelwerte gemäß

$$\max(\mathrm{abs}(a2{-}a1),\mathrm{abs}(a3{-}a3),\ldots,\mathrm{abs}(an{-}an{-}1))$$

berechnet. Wobei sich der gesuchte Schwellenwert aus dem Schnittpunkt zweier Gaußkurven mit Mittelwerten und Standardabweichungen der zuvor ermittelten beiden Gruppen ergibt. (siehe Figur 4 und die Beschreibungen im Teil zum k-Means Cluster Algorithmus).liegt genau zwischen diesen beiden Nachbarn.

In Figur 3 sind 2 Fallbeispiele dargestellt, wobei im ersten Fall 150 Werte pro Betriebszustand vorhanden sind und k=15 und 1=31 gewählt wurde und im anderen Fall nur 15 Werte pro Betriebszustand und k= 9 und 1=3. Natürlicherweise werden bei größerer Datenmenge klarere Ergebnisse erzielt, aber auch bei sehr kleiner Datenmenge, kann bei geeigneter Wahl von k und l ein gutes Ergebnis erreicht werden.

Bei der Wahl von l und k gilt es dabei folgendes zu berücksichtigen:

- Um Maxima und Minima in der Differenz der Mittelwerte zu verstärken sollten l und k maximal weit auseinander liegen
- k, der kleinere Wert von beiden, sollte groß genung gewählt werden um nicht sensitiv auf einzelne Ausreißer (siehe Figur 3 a) bei t~220) zu sein.
- l, der größere Wert von beiden, muss klein genug gewählt werden, dass ausreichend Datenpunkte im Seitenband erhalten bleiben um ein sinnvolle Mittelwert und Standardabweichung bestimmen zu können.

Diese gegenläufigen Forderungen müssen zusammen mit der Anzahl der Daten, die bei gegebener Speichergröße, vorgehalten werden können abgewogen werden um ein sinnvolle Wahl für l und k zu treffen.

In Figur 4 ist dargestellt wie sich die Diskriminatorwerte gemäß

- dem ersten Ausführungsbeispiel des erfindungsgemäßen Verfahrens gebildeten Cluster Cluster 1 und Cluster 2
- dem zweiten Ausführungsbeispiel des erfindungsgemäßen Verfahrens gebildeten Plateaus Plateau 1 und Plateau 2
- dem dritten Ausführungsbeispiel des erfindungsgemäßen Verfahrens gebildeten Gruppen Gruppe 1 und Gruppe 2

darstellen. Im Weiteren sind die beiden Gaußkurven mit Mittelwert und Standardabweichung der beiden Cluster/Plateaus/Gruppen gezeigt und es ist graphisch auch der so gefundene Schwellwert, der aus dem Schnittpunkt der beiden Gauskurven ermittelt wird.

Ein durch einen Pseudocode beschriebenes Beispiel einer möglichen Implementierung der Berechnung ist unter der in Figur 4 gezeigten Verteilung der Diskriminatorwerte zu sehen und wird hier, da er sich einem Fachmann der Informationstechnik selbst erklärt lediglich wiederholt:

```
Gausschnittpunkt (m1,m2,sd1,sd2){
if (m1 > m2) {
    swap(m1,m2)
    swap(sd1,sd2)
}
if (sd1 == sd2)
  return(abs((m1-m2)/2)+m1)
a =1/(2*sd1**2) - 1/(2*sd2**2)
b = m2/(sd2**2) - m1/(sd1**2)
c = m1**2 /(2*sd1**2) - m2**2 / (2*sd2**2) -
```

```
log(sd2/sd1)
 sol1 = (-1*b - sqrt(b**2-4*a*c))/(2*a)
 sol2 = (-1*b + sqrt(b**2-4*a*c))/(2*a)
 if (sol1 > m1 && sol1 < m2) {
  return (sol1)
 } else if(sol2 > m1 && sol2 < m2) {
  return(sol2)
 } else {
return(NA)
 }
}
```

Die Erfindung ist nicht auf die gezeigten Ausführungsbeispiele beschränkt. Vielmehr umfasst es alle durch die Ansprüche definierten Ausgestaltungen, insbesondere wenn sie die Vorteile erfüllen:

- Durch die Verfahrensweise in der vorliegenden Erfindung ist keine manuelle Analyse bzw. keine manuelle Parametrisierung eines auf einer externen Sensorbox implementierten Algorithmus bei Installation der externen Box mehr notwendig, was zu deutlicher Zeiteinsparung führt. Ebenso ist manuelles Beobachten nicht mehr notwendig um den Algorithmus gegebenenfalls mit neuen Parametern zu aktualisieren, falls sich Bedingungen ändern. Die externe Box kann zudem auf unterschiedlichen Maschinen angebracht und sofort in Betrieb genommen werden.

- Der erfindungsgemäße Prozess ist, anhand einer Initialen Kalibrierungsphase bei Inbetriebnahme, selbstkalibrierend und frei von Maschinenspezifischen Parametern, die manuell gesetzt werden müssen. Die Parameter werden automatisch an Hand der Daten bestimmt. Das erfindungsgemäße Verfahren ist adaptiv und adaptiert die Parameter gegebenenfalls an sich ändernde Bedingungen, in dem an Hand der Daten immer wieder überprüft wird ob die Parameter noch passen.

**Patentansprüche**

1. Verfahren zum Ermitteln zumindest eines Betriebszustandes einer Maschine, insbesondere im industriellen Umfeld, **dadurch gekennzeichnet, dass**

   g) zumindest ein Sensor ins Nahfeld der Maschine gebracht und betrieben wird,
   h) zumindest ein Betriebszustand der Maschine derart ermittelt wird, dass zumindest eine Wert einer mit dem Betriebszustand korrelierenden physikalischen Größe durch den Sensor erfasst wird,
   i) die Erfassung in zumindest einem ersten Zeitraum, insbesondere in zeitlichen Abständen, erfolgt,
   j) zumindest eine Korrelation einer Auswahl an möglichen Betriebszuständen zur Historie der in dem ersten Zeitraum erfassten Werte gebildet wird,
   k) das für dem ersten Zeitraum folgenden Erfassungen von Werten eine Festlegung des Betriebszustands aus einer Auswahl an möglichen Betriebszuständen, zumindest auf Grundlage der Korrelation erfolgt,
   l) mit zeitlich in dem ersten Zeitraum folgenden Zeiträumen erfassten Werte die Historie und die Korrelation sukzessive aktualisiert werden.

2. Verfahren nach dem vorhergehenden Anspruch, **dadurch gekennzeichnet, dass** die Korrelation auf Grundlage zumindest eines Schwellwertvergleichs erfolgt.

3. Verfahren nach dem vorhergehenden Anspruch, **dadurch gekennzeichnet, dass** ein dem Schwellwertvergleich zugrundeliegender Schwellwert zumindest auf Grundlage der Historie, insbesondere der Verteilung der der Historie zugrundeliegenden Werte der erfassten physikalischen Größen, gebildet wird.

4. Verfahren nach einem der beiden vorhergehenden Ansprüche, **dadurch gekennzeichnet, dass** der Schwellwert fortlaufend durch zeitlich dem ersten Zeitraum folgende erfasste Werte aktualisiert wird.

5. Verfahren nach einem der Ansprüche 2 bis 4, **dadurch gekennzeichnet, dass** die Aktualisierung des Schwellwerts, Korrelation und/oder der Festlegung auf zumindest Grundlage der Qualität des Unterschieds, insbesondere der Richtung der Veränderung des Wertes im Bezug zum Schwellwert, von aktuellem Wert und Schwellwert initiiert wird.

6. Verfahren nach dem vorhergehenden Anspruch, **dadurch gekennzeichnet, dass** die Initiierung bei Auftreten eines signifikanten Qualitätsunterschieds, beispielsweise Richtungswechsel und/oder Wert der Zu- bzw. Abnahme des Wertes, erfolgt.

7. Verfahren nach einem der Ansprüche 2 bis 6, **dadurch gekennzeichnet, dass** die Bildung des Schwellwerts auf Grundlage einer Mittelwertbildung der Verteilung der bekannten Werte der physikalischen Größe erfolgt.

8. Verfahren nach dem vorhergehenden Anspruch, **dadurch gekennzeichnet, dass** die Mittelwertbildung Messereignis-getrieben, insbesondere auf Grundlage mindestens zweier erfasster Werte pro Betriebszustand basierenden, Algorithmen, insbesondere nach Art des so genannten "k-means Cluster", "Adaptive Plateau Fitter" und/oder "Sliding Aggregation Windows", durchgeführt wird.

9. Verfahren nach einem der vorhergehenden Ansprüche, **dadurch gekennzeichnet, dass** die Festlegung des Betriebszustandes ab einer bestimmten Anzahl an Messerwerten, insbesondere als Bestandteil eines Kalibrierungsprozesses, vorzugsweise im Rahmen einer Initialisierung des Verfahrens zur Erfassung, erfolgt.

10. Verfahren nach einem der vorhergehenden Ansprüche, **dadurch gekennzeichnet, dass** als Betriebszustand bis zum Erreichen der Anzahl von Messwerten und/oder bei Vorliegen einer zumindest teilweise noch nicht erreichter Diskriminierbarkeit der Betriebszustände ein die Unbestimmbarkeit kennzeichnender Zuständ festgelegt wird.

11. Verfahren nach einem der vorhergehenden Ansprüche, **dadurch gekennzeichnet, dass** die für den Schwellwertvergleich als Werte physikalische Größen herangezogen werden, die als Eigenschaft eine gute Diskriminierung von Zuständen einer Maschine ermöglichen.

12. Verfahren nach dem vorhergehenden Anspruch, **dadurch gekennzeichnet, dass** als physikalische Größen im Bezug auf die Maschine extern erfassbare physikalische Größen, wie Temperaturen, insbesondere Außentemperatur der Maschine, Magnetfeldstärken und/oder -verlauf, insbesondere im Umfeld der Maschine, Vibrationen der Maschine und so fort, erfasst werden.

13. Vorrichtung zum Ermitteln zumindest eines Betriebszustandes einer Maschine, insbesondere im industriellen Umfeld, **gekennzeichnet durch** Mittel zur Durchführung des Verfahrens.

# FIG 1

- S1 — Beginn mit Aufnahme von Ereignissen in Liste
- S2 — Anzahl n von Ereignissen gesammelt?
  - <n_min
  - >=n_min
- S3 — Für jedes Ereignis der Liste mache folgende Schritte:
- S4 — Signifikante Änderung aufgetreten?
  - Nein
  - Ja
- S5 — Schwellwertaktualisierung auf Grundlage der neuen Daten
- S6 — Statusermittlung auf Grundlage des Schwellwerts
- S7 — Diskriminator> Schwellwert?
  - Ja
  - Nein
- AN Kandidat
- S8 — AUS Kandidat
- S9 — Kandidatentyp der vergangenen m Statusereignisse?
  - gemischt
  - Alle "AN"
  - Alle "AUS"
- S12 — Status: Unbekannt
- S10 — Maschinenzustand: AUS
- S11 — Maschinenzustand: AN

# FIG 2

S5_1

Füge Daten hinzu

Modeliere Daten mit Stufenfunktion f(t, t0): Minimiere sum(abs(f(t, t0)-D(t))$^2$)

S5_2

S5_3

abs (mean(pl1)-mean(pl2)) > sd(pl1)+sd(pl2) ?

Nein

Ja

S5_4

1. Friere Plateau 1 ein: Speichere Mittelwert, Standardabweichung und Anzahl der Messwerte im Plateau
2. Lösche Daten des Plateaus 1
3. Plateau 2 wird zu Plateau 1
4. Kalkuliere Schwellwert auf Basis aller gespeicherten Plateaus

Schwellwertkalkulation:
1. Sortiere alle Plateaus bzgl. Ihrer Mittelwerte
2. Finde die zwei Plateaus mit größter Distanz zwischen den Mittelwerten
3. Schwellwert ist die Mitte zwischen den beiden Mittelwerten

S5_5

Diskriminator D(t) — Plateau 1, Plateau 2 — Zeit t

Diskriminator D(t) — Plateau 1, Plateau 2 — Zeit t

FIG 3

a)

# FIG 3

## b)

EP 3 454 155 A1

# FIG 4

Exemplarische Verteilung der Diskriminatorwerte

```
gausschnittpunkt (m1, m2, sd1, sd2){
if (m1 > m2){
   swap(m1, m2)
   swap(sd1, sd2)
}

if (sd1== sd2)
  return(abs((m1 - m2)/2) + m1)

a = 1/(2*sd1**2) - 1/(2*sd2**2)
b = m2/(sd2**2) - m1/(sd1**2)
c = m1**2/(2*sd1**2) - m2**2/(2*sd2**2) - log(sd2/sd1)

sol1 = (-1*b - sqrt(b**2 - 4*a*c))/(2*a)
sol2 = (-1*b + sqrt(b**2 - 4*a*c))/(2*a)

if (sol1 > m1&&sol1 < m2){
return(sol1)
} else if(sol2 > m1&&sol2 < m2){
return(sol2)
} else {
return(NA)
}
}
```

Europäisches
Patentamt

European
Patent Office

Office européen
des brevets

**EUROPÄISCHER RECHERCHENBERICHT**

Nummer der Anmeldung

EP 17 19 0391

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/220847 A1 (SHIBUYA HISAE [JP] ET AL) 6. August 2015 (2015-08-06) * das ganze Dokument * ----- | 1-13 | INV. G05B23/02 |

RECHERCHIERTE
SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| München | 27. Februar 2018 | Marrone, Fabrizio |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 17 19 0391

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-02-2018

| Im Recherchenbericht angeführtes Patentdokument | Datum der Veröffentlichung | Mitglied(er) der Patentfamilie | Datum der Veröffentlichung |
|---|---|---|---|
| US 2015220847 A1 | 06-08-2015 | EP 2905665 A2 | 12-08-2015 |
| | | JP 5753286 B1 | 22-07-2015 |
| | | JP 2015148867 A | 20-08-2015 |
| | | US 2015220847 A1 | 06-08-2015 |

Für nähere Einzelheiten zu diesem Anhang : siehe Amtsblatt des Europäischen Patentamts, Nr.12/82